# EUROPEAN PATENT SPECIFICATION

(11) **EP 0 324 513 B1**
(45) Date of publication and mention of the grant of the patent: **11.05.1994**
(21) Application number: 89103599.0
(22) Date of filing: 18.01.1985
(51) Int. Cl.: C04B 35/10, C09K 3/14, C01F 7/02

(54) **Ceramic shaped article and methods of making same**
Geformter keramischer Gegenstand und Verfahren zu seiner Herstellung
Objet céramique moule et méthodes pour sa fabrication

(30) Priority: 19.01.1984 US 572106; 23.03.1984 US 592689; 19.10.1984 US 662869
(43) Date of publication of application: 19.07.1989
(62) Divisional of application: 85100506.6
(73) Proprietor: NORTON COMPANY, Worcester, MA 01606-2698 (US)
(72) Inventor: Cottringer, Thomas E., Niagara Falls Ontario (CA); van de Merwe, Ronald H., Niagara Falls Ontario (CA); Bauer, Ralph, Niagara Falls Ontario (CA)
(74) Representative: Diehl, Hermann O. Th., Dr.

(56) References cited:
- EP-A- 0 024 099
- US-A- 3 108 888
- JOURNAL OF THE AMERICAN CERAMIC SOCIETY, vol. 67, no. 11, November 1984, pagesC230-C231, Columbus, Ohio, US; M. KUMAGAI et al.: "Enhanced densification ofboehmite sol-gels by alpha-alumina seeding"

## Description

The invention relates to the production of shaped bodies containing high density poly-crystalline alpha alumina, or such alumina with other additives.

Hard and strong abrasive grits, for use in grinding wheels, flexible coated abrasive products ('sandpaper'), or as loose abrasive, are produced commercially from alumina containing raw materials either by fusion in an electric furnace or by the firing of shaped bodies containing finely divided alumina at temperatures well below the fusion points of the material. Such lower temperature process is called sintering. This invention relates to aluminous shaped bodies made by the sintering process.

The first large-scale commercially produced sintered abrasives were produced by the method taught in U.S. Patent 3 079 243 to Ueltz. This patent teaches the milling of calcined bauxite to produce a fine particle size raw material which is then formed into abrasive grit sized particles and fired at about 1500°C to form hard, strong, tough pellets of polycrystalline alumina.

Recently, abrasive materials consisting of grits made up of alumina and magnesia spinel, presumably made according to the teachings of US patent 4 314 827, and made according to the teaching of published British Application 2,099,012A, published 1 December 1982, have been commercially introduced. These materials are produced by the sintering (at about 1400°C.) of dried alumina gel particles. U.S. Patent 3,108,888 to Bugosh also teaches making high density alumina (or alumina containing) products by firing a dried alumina gel made from alpha alumina monohydrate (boehmite) or by hot pressing dried powders made from such gels.

Alumina/magnesia-spinel commercial abrasives made from gels contain alumina in the form of cells from 5 to 15 µm in diameter. The cells, or "sunbursts", are made up of many elongated alumina arms 0.2 to 0.4 micrometers in diameter (but some of which can be as large as 1 micrometer in the form of very roughly spherical "blobs"), the arms in each cell appearing generally to radiate from the center of the cell. All of the arms in a given cell are apparently crystallographically identically oriented. Such orientation is shown by the fact all the area of a given cell extinguishes simultaneously upon sample rotation when viewed between crossed polarizers by transmitted light microscopy.

While the commercial abrasives made from sintered gels containing alumina and magnesia are high quality abrasives, it has not bean possible to produce high purity alumina grits by the gel route. This is shown by the relative softness and lack of abrasive utility for the "control" example 13 in U.S. Patent 4,314,827 which was made from an alumina gel without metal oxide or metal salt additions.

In US-A-4 252 544 alumina abrasive grains are disclosed, wherein the grain structure is constructed of alumina coarse crystal particles of sizes in the range of 3 to 10 µm and alumina fine crystal particles of sizes smaller than 2 µm. The fine crystals are interposed among the coarse crystal particles. The coarse particles present up to 60 weight % in the abrasive grains, represent the essential grinding compound. The fine particles having a size below 2 µm and being made of electro fused alumina only form the matrix for the coarse particles having a size of 3 to 10 µm. Further, the fine particles act as a filler material for the abrasive grains to obtain a high density of more than 3.75 g/cm³. A Knoop hardness of 200 kg/mm² can only be obtained if the mean fine particle size is 1.3 µm or above.

US-A-3 909 991 describes a method of manufacturing sintered abrasive grains employing isostatic hot pressing. The abrasive grains are preshaped from a base refractory material selected from the group consisting of bauxite, spinel, alpha-alumina, zirconia and mixtures thereof, having an average particle size of less than 1 µm, and then the preshaped particles are hot-pressed while suspended in a high temperature isostatic pressing medium like graphite, boron nitride or the like. The resulting sintered particles have e.g. a specific gravity of 3.86 g/cm³ and an average crystal size of less than 0.5 µm. This document, however, is silent about any hardness values of the abrasive grains. Comparative tests conducted according to the teaching of US-A-3 909 991 showed that the abrasive grains produced had a hardness of below 16 GPa, if the grain size was below 1 µm. Higher hardnesses could only be obtained by allowing substantial growing of the particles. It was not possible to obtain both high hardness above 16 GPa and non-growing, submicron sized particles at the same time.

The present invention provides improved shaped bodies as disclosed in the independent claim 1 Further advantageous features of the bodies according to the invention and methods for making same are evident from the dependent claims.

The ceramic article is a body containing equiaxed alpha alumina submicron crystallites and the alumina of said body having a hardness of at least 18 GPa shows a density of 90% or greater and has been made by sintering an alpha alumina precursor below 1400°C. A spinel matrix may surround the alumina particles.

A method of making the ceramic bodies containing alpha alumina having a hardness of greater than 18 GPa, a density greater than 90%, and an alpha alumina particle size below one micron, comprised of providing a dispersion of submicron hydrated alumina particles, said dispersion including an effective amount of submicron alpha alumina crystalites whereby upon drying and firing said hydrated alumina particles are converted to alpha alumina at a temperature below 1100°C, and firing said body to below 1500°C.

In a further method of producing polycrystalline alumina bodies fine alumina particles in a form having theoretical density less than that of alpha alumina are provided, submicron alpha alumina seed material is mixed with said fine alumina particles, and firing is effected to a temperature of at least 1090°C whereby the fine alumina particles are converted to alpha alumina and a body having a hardness of at least 18 GPa is produced.

The invention resides in the discovery that control of the microstructure of the fired product, such that the cellular structure of the alumina in the prior art abrasives is avoided, results in improved product performance. The resulting product, instead of cell areas of 5 to 10 micrometers in diameter, contains alpha alumina particles (crystallites) of submicron size (0.2 to 0.4 micrometers).

When higher MgO amounts (e.g. in some cases at 5%) are added, these alumina particles are surrounded by a matrix of spinel.

Conditioning of the gel to achieve the described effect can be achieved by vibratory milling of the mix in the sol or diluted gel form while employing alumina bodies as the grinding medium in the mill. It is believed that the main effect of the milling is to introduce material from the alumina grinding media into the alumina gel. Also impurities such as zinc and iron are introduced from the piping and associated equipment. Milling with zirconia bodies, for example, is ineffective to produce the desired essentially non-cellular structure.

The first effective and reproducable method found by us was to generate such material in the gel by vibratory milling of the gel with alumina bodies. A suitable vibratory mill is shown in U.S. Patent 3,100,088. Typically the media may be 1.27 cm (1/2 inch) in diameter and 1.27 to 1.90 cm (1/2 to 3/4 inches) long. The tub which contains the media and the mix is vibrated in the horizontal plane by an off-balance weight connected to the shaft of a motor mounted coaxially with the tub which is mounted on springs. The off-balance weight is mounted adjacent the plane of the bottom of the tub and a second weight is mounted below it. The motor typically rotates at 1200 rpm. The combined oscillation subjects the contents to a milling action by the grinding media. The interior surface of the mill is preferably lined, as with rubber, to prevent contamination by erosion of the metal walls.

Various additives such as taught in U.S. Patent 4,314,827 and British Application 2,099,012A can be added to the alumina before or after gelling. The most useful additive presently known is any compatible precursor of MgO, whereby the final product contains preferably around 5% MgO. The MgO is present, however, in the product as spinal (magnesium aluminate: MgAl₂O₄) but calculated as MgO in the analysis. Obviously lesser amounts of MgO may be included since the alumina with no addition is an excellent abrasive in its own right when produced according to the present invention. The milled gel of the present invention may serve as a matrix for various added materials or abrasive particles.

The milled mix may be simply poured or placed into containers to dry and then broken up into appropriate sized pieces by crushing, with undersized material recycled to the beginning of the process. Alternatively, the material may be formed or molded into shaped particles as by extrusion. In the case of extrusion, the rods formed would later be cut or broken into appropriately sized pieces. The minimum useful firing temperature is significantly below 1200°C., usually considered the transformation point to convert to alpha alumina. The upper limit is not critical so long as the fusion temperature Is not reached. Too long a firing or too high a temperature can cause excessive crystal growth. Higher temperatures increase the cost of the process also, so the preferred firing range is 1200 to 1500°C.

The following examples, as far as they refer to abrasive grits--only illustrate the general principles of the invention and are not direct embodiments of the claimed invention.

### EXAMPLE I

In a large polymeric plastic mixing vessel 13.6 Kg (30 pounds) of Condea S3 Pural Alumina (supplied by Condea) and 136 liters (30 Imperial gallons) of water were mixed. This material was then gelled by adding 4.1 liters of 14 weight % HNO₃. Magnesium nitrate hydrate 3.4 kg (7.5 pounds) dissolved in 13.7 liters (3 gallons) of water was then added to the alumina gel to give 5% by weight of MgO in the final product. It was mixed for 15 minutes and transferred to a Model M451 Sweco mill and milled for 1 hour with 772 kg (1700 pounds) of alumina media. The mix was recirculated through the mill for the one hour milling time at a rate of about 18 liters (4 gallons) per minute. After milling it was pumped into aluminum trays to a thickness of about 3 inches 7.6 cm) for drying on electric strip dryers.

The alumina media composition was about 90% alpha alumina with silica as the main impurity.

A series of batches according to the above formulation were made up and combined for crushing and firing.

The dried gel was then roll crushed and screened to a sieve having openings of 1.19 mm. through (14 mesh) before firing to yield the desired final grit sizes. It was then prefired at 400°C for 16 hours and fired at 1400°C. for 30 min. in a rotary kiln.

After firing all of the products had a hardness of 19 GPa (Vickers indenter, 500g load) and a very fine microstructure in which there was no cellular microstructure and, almost all of the alpha alumina was in the form of generally equiaxed particles (crystallites), 0.2 to 0.4 µm, (microns) in diameter, except for rare square blocky shapes about 5 µm (microns) in diameter. The blocky shapes may have indicated contamination. The product, upon examination by the scanning electron microscope, was seen to be comprised of a spinel matrix and a discontinuous phase of alpha alumina.

In some specific coated abrasive grinding applications the material was superior to fused alumina-zirconia and superior to commercially available sintered gel type abrasive of the alumina-spinel composition.

### EXAMPLE II

Pural microcrystalline boehmite alumina, 22.7 kilograms, was mixed with 225 liters of water and 13.5 liters of 14% HNO₃ for 10 to 15 minutes.

One half of the gel mixture was milled for 2 hours in the Sweco mill containing 1.27 x 1.27 cm (1/2 x 1/2 inch) ceramic bonded alumina, 88% Al₂O₃ (the main impurities being MgO 1.74%, SiO₂ 8.9%, Fe₂O₃ 0.18%, TiO₂ 0.2%, CaO 0.8%, Na₂O 0.34%), available from Coors Porcelain Co., and dried. This was the same media as used in Example I. The other half was simply dried without milling. The dried gels were crushed to size, prefired at 450°C. for 16 hours and fired at 1400°C. for 1 hour.

The milled material had a hardness of 19.1 GPa, the unmilled material had a hardness of 11.0 GPa.

Material from each batch was screened to produce 50 grit abrasive grains which were then used to produce vulcanized fiber backed coated abrasive discs. The milled material outperformed commercial alumina zirconia abrasive by better than 10% in grinding 1020 steel (the test showed a 14% higher metal removal).

The unmilled product was inferior to fused abrasive in all grinding tests, which was to be expected in view of its low hardness.

### EXAMPLE III

In an example similar to that of the milled product of Example I, the gel was milled for 0.2 hours. The product, fired at 1400°C. for one hour, was mainly of the fine random 0.2 to 0.3 mm crystal structure, but showed some cellular appearance.

### EXAMPLES IV TO IX

Further examples were performed in a study of the effect of firing time at 1400°C. All samples were made by the general procedure of Example I. Condea microcrystalline boehmite alumina was employed, milling was for two hours, but after drying, the gels were prefired at 750°C. for 30 minutes. As the firing time was increased, there began to appear in the product a coarse lath shaped crystallization of alumina, randomly dispersed among the fine 0.2 to 0.4 micrometer alumina particles.

The results are tabulated as follows:

| Firing Time (minutes) | Particle Size (Micrometers) | | % Ratio Coarse/Coarse and Fine |
|---|---|---|---|
| | Coarse | Fine | |
| 1 | None | 0.2-0.3 | 0 |
| 3 | 1.0-2.0 | 0.2-0.3 | 5 |
| 5 | 2 - 5 | 0.2-0.3 | 20 |
| 10 | 4 - 8 | 0.2-0.3 | 50 |
| 30 | Up to 8 | 0.2-0.3 | 80 |
| 60 | Up to 8 | 0.2-0.3 | 95 |

Since the presence of the coarse fraction is believed to be less desireable, the firing time at 1400°C. should not be more than 5 minutes for the preferred product when the material is prefired at 750°C. for 30 minutes.

In all cases, no cellular structure was observed. The microstructures consisted of the non-faceted submicron particles and the faceted lath-like coarse crystals, except in the case of the 1 minute firing where no laths were found.

By "non-faceted" we mean no regular faceting of the crystallites was observed in a fractured surface at 5,000X magnification by the scanning electron micro-scope. The particles of alpha alumina were, instead, rather formless, but equiaxed, with generally curved outlines, and very few apparent straight outlines. At 20,000X magnification faceted structure begins to be clearly apparent.

The abrasive grits have a hardness measured by the Vickers indenter with a 500 gram load of at least 18 GPa (90% theoretical density) for alumina without additions and also at least 18 GPa for the grits which are modified by the presence of spinel formers or are modified by other additives. While pure dense alpha alumina has a hardness of about 20-21 GPa, some porosity may be desireable for certain applications which would lower the hardness. When the alumina has a hardness of less than 18 GPa , it is too porous for the purposes of this invention. Therefore, the hardnesses are at least 18 GPa or higher as measured by the Vickers indenter at a 500g load.

### EXAMPLE X

A series of abrasives of varying magnesia content were made.

The general procedures of Example I were employed, including the milling (but for 2 hours) with alumina media. In all cases the gels, after drying at 200°C. for about 30 hours, were crushed and screened and then calcined at 450°C. for 16 hours. The resulting grit sized particles were fired in a rotary kiln at 1400°C. The heat-up time to 1400°C. was about 15 minutes, and the time at 1400°C. was about 15 minutes.

Various amounts of magnesium nitrate were added prior to the gelling. In one run no magnesium nitrate was added. The MgO content and hardness of the abrasives were as follows:

| Run No. | MgO Content % by Wgt. | Hardness (Vickers 500 g load) |
|---|---|---|
| 9498 | 0.14 | 19.9 |
| 9499 | 2.50 | 19 |
| 9500 | 7.95 | 19 |
| 9502 | 12.71 | 19 |

In a series of tests of vitrified (glass bonded) grinding wheels employing 54 grit (a combination of 46 grit and 60 grit sizes) sized abrasive wheels made with the above grits were compared with the highest quality known fused alumina abrasive (sulfide process abrasive).

The tests were carried out by grinding slots in tool steel (D3) at various controlled in feeds. In dry grinding, at 12,7 µm (0.5 mils or .0005 inches) downfeed, the abrasive containing no added MgO (0.14% MgO) had a grinding ratio 16.18 times the grinding ratio of the fused abrasive (G ratio is the volumetric ratio of material removed to wheel wear). All of the MgO additions resulted in superior performance over the fused abrasive in the dry grinding tests. In the wet grinding tests the experimental abrasives with MgO added were poorer than or equal to the fused abrasive. At 50.8 µm (2 mils) the no-magnesia-addition abrasive was superior to the fused.

In coated abrasive tests employing 50 grit size abrasive (CAMI standard) an abrasive made according to Example X, and containing 0.6% MgO, incorporated into flexible abrasive discs performed better (136%) than co-fused alumina zirconia abrasive on 1020 steel and almost equivalent to fused alumina-zirconia on stainless steel. The abrasives containing 2.5% MgO and 7.59% MgO were also superior on 1020 steel. The higher MgO addition was less effective on stainless.

The 0.14% MgO abrasive contained, in addition to the alumina: 0.25% SiO₂, 0.18% Fe₂O₃, 0.28% TiO₂, 0.05% CaO, and 0.04% Na₂O, presumably mainly introduced in the milling operation. Similar levels of these impurities were present in the other abrasives.

While applicants do not wish to be bound by any particular theory of the invention, it is believed that the introduction from the alumina media of particulate matter may effect seeding of the crystallization of alpha alumina during the firing. Additionally, the other impurities introduced in the milling step may inhibit crystal growth of the final product by their presence at grain boundaries between the alpha alumina particles.

As evidence of the fact that it is the debris from the milling media which is effective to condition the gel so that it produces the desired high density, finely crystalline, non-cellular alpha alumina upon firing at about 1400°C., additions of milled water were made to alumina monohydrate together with acid, without milling of the gel.

Water, nitric acid, and microcrystalline boehmite were mixed, as in Example II, except that 6 batches were made, with varying additions of water containing the debris worn from alumina grinding media, when milled for several hours with water (no other addition to the water), as follows:
"Milled water" additions to alumina monohydrate (Condea):

| Trial | Wt.Ratio of milling debris to alumina monohydrate | Wt. % Debris in fired product* | Hardness GPa |
|---|---|---|---|
| 1. | 0.0074 | 1.07 | 20+ |
| 2. | 0.0037 | 0.53 | 20 |
| 3. | 0.0019 | 0.27 | 19+ |
| 4. | 0 | 0 | 12.5 |

| | | | |
|---|---|---|---|
| *Note: Assuming an average loss of weight in firing of 30%. | | | |

The hardness was determined on the fired product, fired at 1400°C. ± 20°C., for about 10 minutes. The furnace was electrically fired, the atmosphere was air.

Examination of the milled debris showed it to be mostly alpha alumina with a surface area of about 39 square meters/gram.

High purity alumina produced by recovery of the fine suspended alumina particles left in suspension when very fine alumina powders are permitted to settle after being mixed with water is also effective, when used in an amount of at least about 0.1% of the fired gel solids.

Tests with commercial fine alpha alumina powders, and tests with fine alumina generated by milling very high purity fused alumina, using such alumina itself as a milling medium, were very effective in producing the dense finely crystalline product of the invention.

Differential thermal analysis has shown that, when the alpha alumina seed particles are present the transition of the gel alumina from presumably the gamma form to the alpha form takes place at about 1090°C., while, in the absence of such seed material the transition takes place at about 1190°C. Thus, the theoretical minimum firing temperature of the products of the present invention can be below the usual reported transformation temperature.

This invention, for the first time, permits the manufacture by low temperature sintering of high purity alpha alumina bodies having a submicron particle size and a density of greater than 95%, resulting in a hardness greater than 18 GPa. Products other than abrasive, such as coatings, thin films, fibers, rods, or small shaped parts, can be made by the process of the present invention.

Grain growth inhibitors such as SiO₂, Cr₂O₃, MgO, and ZrO₂, have been added to the conditioned gel. In the experiments in which MgO was added there was reaction with the alpha alumina and spinel was formed and was observed as surrounding the remaining unreacted alpha alumina. It was assumed that with the other additives compound formation with the alpha alumina was minimal and they remained in the crystal boundaries. The experiments which have been run clearly show that the crystal growth by diffusion and recrystallization was suppressed by the additives. This has value in allowing more flexibility in the time-temperature relationships for the sintered products. The use of the growth inhibitors are well known in ceramic technology and are not a necessary part of the invention but are very useful to maintain the desired microstructure over a broad range of sintering time-temperature and where the high purity of alpha alumina is not a requirement.

## Claims

1. Shaped ceramic articles consisting of a high density polycrystalline phase of submicron, equiaxed non-faceted α-Al₂ O₃ crystallites and optionally faceted lath-like coarse crystals of alumina, randomly dispersed among the submicron crystallites, optionally further containing additives of zirconia, magnesia present as spinel and chromiumoxide for suppressing crystal growth, and impurities said articles having a density of greater than 90% of theoretical density and a hardness of at least 18 GPa, aluminous abrasive grits being excluded.

2. Shaped articles of claim 1, in which the impurities contain zinc and iron.

3. Shaped articles of one of claims 1 or 2 in which up to about 5% of the α-Al₂ O₃ is substituted by MgO present as spinel.

4. Shaped article of one of claims 1 to 3 obtainable by a sol-gel process in which to the gel or gel precursor, submicron sized α-Al₂ O₃ particles have been added.

5. Shaped articles of one of claims 1 to 4, obtainable by a sol-gel process in which the alumina gel is conditioned by vibratory milling the mix in the sol or diluted gel form while employing alumina bodies as the grinding medium in the mill.

6. Shaped articles of one of claims 1 to 5, obtainable by a sol-gel process in which the gel is conditioned by means of an addition of water milled with alumina bodies as the grinding medium in the mill.

7. Shaped articles of claims 5 or 6 in which the alumina grinding bodies contain about 88% α-Al₂O₃.

8. Shaped article of Claim 7 in which the grinding bodies have a composition of about 88% α-Al₂ O₃ with silica as the main impurity.

9. Shaped article of one of the preceding claims in which the submicron α-Al₂ O₃ crystallites have a size of 0.2 - 0.4 µm.

10. A method for making ceramic bodies according to any one of claims 1 to 9, containing high density polycrystalline α-alumina by drying and sintering a hydrated alumina gel characterized by adding submicron sized α-Al₂ O₃ particles to the gel or gel precursor.

11. A method of claim 10 characterized in that the mix in the sol or diluted gel form is milled while employing alumina bodies as the grinding medium in the mill.

12. A method of claim 10 characterized in that water milled with alumina bodies as the grinding medium in the mill is added to the sol or diluted gel.

13. A method of claim 10 characterized in that fine alumina powder is added.

14. A method of one of claims 10 to 13 wherein the bodies are fired at a temperature below 1400°C.

## Patentansprüche

1. Geformte keramische Artikel bestehend aus einer hochdichten, polykristallinen Phase von gleichgerichteten, nicht facettierten α-Al₂O₃-Kristalliten von Submikrongröße und gegebenenfalls facettierten, lattenartigen, groben Aluminiumoxidkristallen, welche ungeordnet unter den Kristalliten von Submikrongröße verteilt sind, wobei gegebenenfalls weitere Zusätze aus Zirkonoxid, Magnesiumoxid in Form von Spinell und Chromoxid zur Unterdrückung des Kristallwachstums sowie Verunreinigungen enthalten sind und die Artikel eine Dichte von über 90% der theoretischen Dichte und eine Härte von mindestens 18 GPa aufweisen, wobei aluminiumhaltige Schleifkörner ausgeschlossen sind.

2. Geformte Artikel nach Anspruch 1, bei denen die Verunreinigungen Zink und Eisen enthalten.

3. Geformte Artikel nach einem der Ansprüche 1 oder 2, bei denen bis zu 5% des α-Al₂O₃ durch MgO, welches als Spinell vorhanden ist, ersetzt sind.

4. Geformte Artikel nach einem der Ansprüche 1 bis 3, erhältlich durch ein Sol/Gel-Verfahren, bei dem dem Gel oder dem Gelvorläufer α-Al₂O₃-Teilchen von Submikrongröße zugegeben worden sind.

5. Geformte Artikel nach einem der Ansprüche 1 bis 4, erhältlich durch ein Sol/Gel-Verfahren, bei dem das Aluminiumoxidgel durch Vibrationsmahlen des Gemisches in Form des Sols oder verdünnten Gels unter Verwendung von Aluminiumoxidkörpern als Mahlmedium in der Mühle konditioniert wird.

6. Geformte Artikel nach einem der Ansprüche 1 bis 5, erhältlich durch ein Sol/Gel-Verfahren, bei dem das Gel durch Zugabe von Wasser, das mit Aluminiumoxid-Körpern als Mahlmedium in der Mühle vermahlen ist, konditioniert ist.

7. Geformte Artikel nach Anspruch 5 oder 6, wobei die Aluminiumoxid-Mahlkörper etwa 88% α-Al₂O₃ enthalten.

8. Geformter Artikel nach Anspruch 7, wobei die Mahlkörper eine Zusammensetzung von etwa 88% α-Al₂O₃ mit Siliziumoxid als der Hauptverunreinigung aufweisen.

9. Geformter Artikel nach einem der vorhergehenden Ansprüche, in denen die α-Al₂O₃-Kristallite von Submikrongröße eine Größe von 0,2 bis 0,4 µm aufweisen.

10. Verfahren zur Herstellung der keramischen Körper nach einem der Ansprüche 1 bis 9, welche hochdichtes polykristallines α-Aluminiumoxid durch Trocknen und Sintern eines hydrierten Aluminiumoxidgels enthalten, dadurch gekennzeichnet, daß dem Gel oder Gelvorläufer α-Al₂O₃-Teilchen in Submikrongröße zugegeben werden.

11. Verfahren nach Anspruch 10, dadurch gekennzeichnet, daß das Gemisch in Form eines Sols oder verdünnten Gels unter Verwendung von Aluminiumoxidkörpern als Mahlmedium in der Mühle gemahlen wird.

12. Verfahren nach Anspruch 10, dadurch gekennzeichnet, daß Wasser vermahlen mit Aluminiumoxidkörpern als Mahlmedium in der Mühle dem Sol oder verdünnten Gel zugegeben wird.

13. Verfahren nach Anspruch 10, dadurch gekennzeichnet, daß feines Aluminiumoxidpulver hinzugefügt wird.

14. Verfahren nach einem der Ansprüche 10 bis 13, bei dem die Körper bei einer Temperatur unterhalb 1400° C gebrannt werden.

## Revendications

1. Articles céramiques conformés constitués d'une phase polycristalline haute densité de cristallites d'alpha-Al₂O₃ équiaxes, sans facettes, d'une taille inférieure au micron, facultativement de cristaux grossiers d'alumine, semblables à des lattes à facettes, dispersés de façon aléatoire parmi les cristallites d'une taille inférieure au micron, et facultativement d'autres additifs d'oxyde de zirconium, de magnésie présente sous la forme de spinelle et d'oxyde de chrome pour supprimer la croissance cristalline, ainsi que des impuretés, lesdits articles ayant une masse spécifique supérieure à 90% de la masse spécifique théorique et une dureté d'au moins 18 GPa, les grains abrasifs alumineux étant exclus.

2. Articles conformés selon la revendication 1, dans lesquels les impuretés contiennent du zinc et du fer.

3. Articles conformés selon l'une des revendications 1 ou 2, dans lesquels jusqu'à environ 5% de l'alpha-Al₂O₃ sont remplacés par du MgO présent sous la forme de spinelle.

4. Articles conformés selon l'une des revendications 1 à 3, pouvant être obtenus par un procédé sol-gel selon lequel on a ajouté au gel, ou au précurseur de gel, des particules d'alpha-Al₂O₃ d'une taille inférieure au micron.

5. Articles conformés selon l'une des revendications 1 à 4, pouvant être obtenus par un procédé sol-gel, selon lequel le gel d'alumine est conditionné par broyage vibratoire du mélange sous la forme de sol ou de gel dilué tout en employant des corps d'alumine comme milieu de broyage dans le broyeur.

6. Articles conformés selon l'une des revendications 1 à 5 pouvant être obtenus par un procédé sol-gel selon lequel le gel est conditionné au moyen d'une addition d'eau broyée avec les corps d'alumine comme milieu de broyage dans le broyeur.

7. Articles conformés selon la revendication 5 ou 6, dans lesquels les corps de broyage d'alumine renferment environ 88% d'alpha-Al₂O₃.

8. Articles conformés selon la revendication 7, dans lesquels les corps de broyage sont constitués d'environ 88% d'alpha-Al₂O₃, la silice constituant l'impureté principale.

9. Articles conformés selon l'une des revendications précédentes, dans lesquels les cristallites d'alpha-Al₂O₃ d'une taille inférieure au micron ont une taille comprise entre 0,2 et 0,4 µm.

10. Procédé de fabrication de corps céramiques selon l'une quelconque des revendications 1 à 9, contenant de l'alpha-alumine polycristalline haute densité, par séchage et frittage d'un gel d'alumine hydratée, caractérisé par l'adjonction, au gel ou au précurseur de gel, de particules d'alpha-Al₂O₃ d'une taille inférieure au micron.

11. Procédé selon la revendication 10, caractérisé en ce que le mélange sous la forme de sol ou de gel dilué est broyé tout en employant des corps d'alumine comme milieu de broyage dans le broyeur.

12. Procédé selon la revendication 10, caractérisé en ce que de l'eau broyée avec les corps d'alumine comme milieu de broyage dans le broyeur est ajoutée au sol ou au gel dilué.

13. Procédé selon la revendication 10, caractérisé en ce que l'on ajoute de la poudre fine d'alumine.

14. Procédé selon l'une des revendications 10 à 13, dans lequel les corps sont cuits à une température inférieure à 1400°C.
